# EUROPÄISCHE PATENTSCHRIFT

(11) **EP 0 945 593 B1**
(45) Veröffentlichungstag und Bekanntmachung des Hinweises auf die Patenterteilung: **07.05.2003**
(21) Anmeldenummer: 98810253.9
(22) Anmeldetag: 23.03.1998
(51) Int. Cl.: F01D 5/18

(54) **Filmkühlungsbohrung**
Film-cooling hole
Trou de refroidissement pelliculaire

(43) Veröffentlichungstag der Anmeldung: 29.09.1999
(73) Patentinhaber: ALSTOM (Switzerland) Ltd, 5401 Baden (CH)
(72) Erfinder: Beeck, Alexander, Dr., 79790 Küssaberg (DE); Bonhoff, Bernhard, Dr., 5400 Baden (CH); Wilfert, Günter, Dr., 79790 Küssaberg (DE)

(56) Entgegenhaltungen:
- US-A- 3 457 619
- US-A- 5 261 789
- US-A- 5 271 715
- US-A- 5 382 133

## Beschreibung

Die Erfindung betrifft eine gekühlte Wand mit Kühlluftbohrungen, insbesondere mit Filmkühlbohrungen.

### Stand der Technik

Zur Steigerung der Leistung und des Wirkungsgrades werden bei heutigen Gasturbinenanlagen immer höhere Turbineneintrittstemperaturen verwendet. Um die Turbinenschaufeln vor den erhöhten Heißgastemperaturen zu schützen, müssen diese intensiv gekühlt werden. Bei entsprechend hohen Eintrittstemperaturen reicht eine rein konvektive Kühlung nicht mehr aus. Es wird daher vielfach die Methode der Filmkühlung verwendet. Dabei werden die Turbinenschaufeln durch einen Kühlfilm vor dem Heißgas geschützt. In die Schaufeln werden dazu Ausnehmungen, beispielsweise Bohrungen, eingebracht, durch die die Kühlluft ausgeblasen wird.

Um einen möglichst hohen Kühleffekt zu erreichen, muß die ausgeblasene Kühlluft möglichst schnell umgelenkt werden und schützend an der Profiloberfläche entlang strömen. Um auch die zwischen den Bohrungen liegenden Gebiete zu schützen, ist zudem eine schnelle seitliche Ausbreitung der Kühlluft erforderlich. Dies kann dadurch erreicht werden, daß die Kühlluftbohrungen einen Diffusor aufweisen, der aufgrund der seitlichen Aufweitung eine breitere Überdeckung der Oberfläche ermöglicht. Zur weiteren Verbesserung des Mischungsverhaltens werden Diffusorgeometrien anwendet, bei denen die Bohrung nicht nur seitlich, sondern zusätzlich auf der stromabwärts liegenden Seite der Bohrung aufgeweitet wird. Die Ausblaseraten bei diesen Diffusorgeometrien sind klein, so dass die Gefahr, dass die Kühlluft durch die Strömungsgrenzschicht hindurchtritt, gering ist. Daher kann der Kühlwirkungsgrad gegenüber einer zylindrischen Bohrung erheblich gesteigert werden.

Eine Erodierelektrode, mit der in Tragflügeln Löcher geformt werden können, die sich in lateraler und longitudinaler Richtung aufweiten, ist aus der Druckschrift US-A-4197443 bekannt.

Die Druckschriften EP-B-228338 oder US-A-5382133 beschreiben eine gekühlte Wand mit einem Kühlmittelkanal, der einen Zumessabschnitt und einen Diffusorabschnitt aufweist. Der Diffusorabschnitt enthält in stromaufwärtiger bzw. stromabwärtiger Richtung jeweils eine ebene Oberfläche. Wenigstens eine der beiden Seitenoberflächen divergiert zu dem Kühlmittelauslass hin von der Achse der Kühlmittelbohrung weg.

Erfahrungsgemäss kommt es im Betrieb einer Gasturbine immer wieder zu Fehlfunktionen, die dazu führen, dass sich Teile der Maschine lösen, durch die Turbine transportiert werden und dabei Schaden anrichten. Die Bereiche mit hoher Strömungsumlenkung sind dabei am meisten von Fremdkörperaufprall betroffen. Die Fremdkörper haben in der Regel eine grössere spezifische Dichte als das die Maschine durchströmende Heissgas. Demzufolge werden die Fremdkörper an diesen Stellen weniger stark umgelenkt und prallen an eine Wand auf. Typische Stellen finden sich etwa im Bereich der Vorderkante auf der Saugseite von Turbinenschaufeln. Treffen die Fremkörper auf solche Stellen der Schaufel auf, an denen Kühlbohrungen angebracht sind, besteht bei den bisher bekannten Diffusorgeometrien die Gefahr, dass der Lochquerschnitt reduziert oder sogar verschlossen wird. Die Kühlwirkung wird dadurch stark vermindert. Bei den heute üblichen engen Auslegungsgrenzen kann dies zu einer Überschreitung der maximal zulässigen Materialtemperaturen führen, was die Lebensdauer der Schaufel drastisch reduziert.

### Darstellung der Erfindung

Hier setzt die Erfindung ein. Es soll eine gekühlte Wand geschaffen werden, die mit einer Anordnung von Kühlungsbohrungen ausgestattet ist, die bei hoher Kühleffektivität eine verbesserte Stabilität und Zuverlässigkeit aufweist. Diese Aufgabe wird durch eine gekühlte Wand mit den Merkmalen des unabhängigen Anspruchs gelöst. Weitere vorteilhafte und zweckmässige Ausgestaltungen ergeben sich aus den abhängigen Ansprüchen, der Beschreibung und den Zeichnungen.

Eine gattungsgemässe gekühlte Wand umfasst eine äussere Oberfläche, die einem Heissgasstrom ausgesetzt ist, welcher in stromabwärtiger Richtung an der äusseren Oberfläche entlangströmt, die eine innere Oberfläche bevorzugt zur Bildung eines Teils einer Kühlmittelkammer zum Aufnehmen von vorzugsweise unter Druck stehendem Kühlmittel, zumindest ein Filmkühlloch innerhalb der Wand, welches einen Diffusorabschnitt und einen Auslass an der äusseren Oberfläche aufweist. Dabei ist die Achse des Filmkühllochs so gerichtet, dass eine Kühlmittelströmung aus dem Auslass so gerichtet wird, dass sie eine Geschwindigkeitskomponente entlang der stromabwärtigen Richtung des Heissgases hat. Der Diffusorabschnitt weist eine erste Innenfläche mit Abstand von einer zweiten Innenfläche auf, wobei die erste und die zweite Innenfläche die äussere Oberfläche der Wand schneiden. Dabei bildet die Schnittkante der ersten Innenfläche mit der äusseren Oberfläche eine stromaufwärtige Kante des Auslasses und die Schnittkante der zweiten Innenfläche bildet mit der äusseren Oberfläche eine stromabwärtige Kante des Auslasses. Weiter weist der Diffusorabschnitt einander zugewandte Seitenflächen auf, die die erste und die zweite Innenfläche verbinden, und die zu dem Auslass des Diffusorabschnitts hin voneinander divergieren. Erfindungsgemäss ist die erste Innenfläche des Diffusorabschnitts so gestaltet, dass der Schnitt der ersten Innenfläche mit einer parallel zur äusseren Oberfläche liegenden Schnittebene ein relativ zur Achse des Filmkühllochs konvex gekrümmtes Profil ergibt.

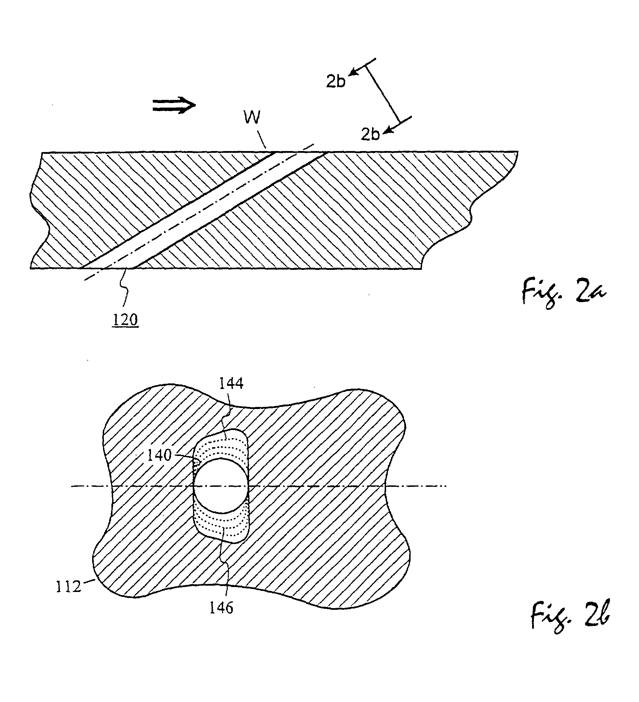

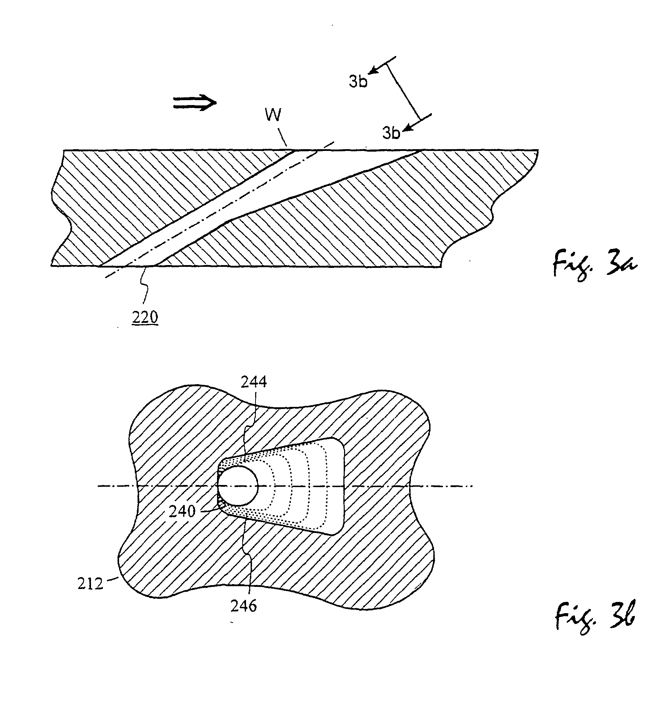

Die Figuren 2a und 2b zeigen eine bekannte Diffusorgeometrie mit seitlicher Aufweitung, die Figuren 3a und 3b eine bekannte Diffusorgeometrie mit zusätzlicher stromabwärtiger Aufweitung des Filmkühllochs. Es wurde nun gefunden, dass solche Kühlbohrungen an der stromaufwärtigen Auslasskante (W) besonders anfällig für Fremdkörperaufprall sind. Die Wand ist dort sehr dünn und wird durch Fremkörperaufprall leicht nach unten gedrückt. Der Querschnitt der Filmkühlbohrung wird dadurch verringert, im Extremfall wird die Bohrung sogar ganz verschlossen.

Durch die erfindungsgemäße Ausrundung der ersten Innenfläche des Diffusorabschnitts zur Achse der Kühlbohrung hin wird die Steifigkeit der Kante deutlich erhöht, da die beim Aufprall eines Fremdkörpers entstehenden Kräfte seitlich in Gebiet größerer Wandstärke abgelenkt werden.

Die Stabilität eines solchen erfindungsgemäßen Filmkühllochs liegt zwar unter der eines zylinderförmigen Lochs, aber deutlich über der konventioneller nichtkreisförmiger Löcher. Die Kühleigenschaften liegen dagegen klar über denen zylindrischer Löcher, sie sind verglichen mit den üblichen Diffusorgeometrien (Fig. 2 und 3) praktisch nicht verringert.

Bevorzugt wird die erste Innenfläche des Diffusorabschnitts elliptisch, besonders bevorzugt kreisförmig gerundet. Dabei bezieht sich die Angabe der Kurvenform auf einen Schnitt des Lochs mit einer Ebene parallel zur äußeren Oberfläche. Insbesondere wird bei einer kreisförmigen bzw. elliptischen Rundung der Innenfläche also die Schnittkante der Innenfläche mit der äußeren Oberfläche selbst kreisförmig bzw. elliptisch sein. Der Krümmungsradius kann entlang der Achse des Filmkühllochs variieren und geht dann stetig von der Krümmung am Einlaß des Diffusorabschnitts zu der Krümmung an der äußeren Oberfläche über.

Zweckmäßig ist auch eine parabolische oder hyperbolische Ausrundung oder die Ausgestaltung der Ausrundung der Innenfläche unter Verwendung von zwei oder mehreren Korbbögen.

Bevorzugt ist die erste Innenfläche so gestaltet, daß sie in einer glatten Kurve in die Seitenflächen übergeht. Die zweite Innenfläche ist vorteilhaft im wesentlichen eben und geht mit Vorteil ebenfalls in einer glatten Kurve in die Seitenflächen über.

Vorteilhaft divergieren die erste und zweite Innenfläche zu dem Auslaß des Diffusorabschnitts hin voneinander unter einem Winkel kleiner als 30°, bevorzugt unter einem Winkel zwischen 5° und 20°. Weiter ist es vorteilhaft, wenn wenigstens eine der Seitenflächen von der Achse des Filmkühllochs weg unter einem Winkel größer als 5°, bevorzugt größer als 10°, divergiert. Besonders vorteilhaft divergieren beide Seitenflächen unter einen solchen Winkel von der Achse weg. Die Achse jedes Filmkühllochs schließt mit der äußeren Oberfläche vorzugsweise einen Winkel zwischen 5° und 50°, bevorzugt zwischen 15° und 40°, besonders bevorzugt zwischen 25° und 35° ein.

In einer weiteren Ausgestaltung der Erfindung weist jedes Filmkühlloch einen Zuführabschnitt auf, wobei der Zuführabschnitt einen Einlaß an der inneren Oberfläche aufweist und der Auslaß des Zuführabschnitts den Einlaß des Diffusorabschnitts bildet. Bevorzugt hat der Zuführabschnitt zwischen seinem Einlaß und seinem Auslaß eine konstanten Querschnitt, besonders bevorzugt einen konstanten elliptischen Querschnitt. Es liegt jedoch auch im Rahmen der Erfindung, daß der Querschnitt des Zuführabschnitts nicht konstant bleibt, sondern sich zum Diffusorabschnitt hin etwa durch eine Stufe oder eine Fläche anderer Steigung vergrößert.

In einer Ausgestaltung der Erfindung bildet die gekühlte Wand die äußere Wand eines Hohlprofilkörpers, insbesondere einer Gasturbinenschaufel.

Die Erfindung soll nachfolgend anhand von Ausführungsbeispielen im Zusammenhang mit den Zeichnungen näher erläutert werden. Es zeigen
- Fig. 1a: einen Querschnitt durch eine gekühlte Wand mit einem erfindungsgemäßen Filmkühlloch;
- Fig. 1b: eine Teilansicht der gekühlten Wand in Richtung 1b-1b von Fig. 1a;
- Fig. 2a: einen Querschnitt durch eine gekühlte Wand mit einem Filmkühlloch mit seitlicher Aufweitung nach dem Stand der Technik;
- Fig. 2b: eine Teilansicht der gekühlten Wand in Richtung 2b-2b von Fig. 2a;
- Fig. 3a: einen Querschnitt durch eine gekühlte Wand mit einem Filmkühlloch mit seitlicher und stromabwärtiger Aufweitung nach dem Stand der Technik;
- Fig. 3b: eine Teilansicht der gekühlten Wand in Richtung 3b-3b von Fig. 3a;
- Fig. 4-7: jeweils eine Ansicht wie Fig. 1b, entsprechend weiteren Ausführungsbeispielen der Erfindung;

Es sind nur die für das Verständnis der Erfindung wesentlichen Elemente gezeigt. Nicht gezeigt ist beispielsweise der vollständige Hohlprofilkörper und gesamte Anordnung der Kühlbohrungen. Die Strömungsrichtung des Arbeitsmittels ist mit Pfeilen bezeichnet.

### Wege zur Ausführung der Erfindung

Figur 1(a) zeigt einen Querschnitt durch eine Wand 10 eines Hohlprofilkörpers einer Gasturbinenschaufel mit einem Filmkühlloch 20 nach der Erfindung. Das Filmkühlloch 20 erstreckt sich von der inneren Oberfläche 14 zur äußeren Oberfläche 12 der Wand 10. An der äußeren Oberfläche 12 strömt in Pfeilrichtung Heißgas entlang. Die innere Oberfläche 14 ist Begrenzungsfläche einer Kühlmittelkammer, die unter Druck stehende Kühlluft enthält. Auf der Kühlkammerseite weist das Filmkühlloch einen zylindrischen Zuführabschnitt 22 auf, dessen Querschnitt am Einlaß 30 die durchströmende Kühlluftmenge bestimmt.

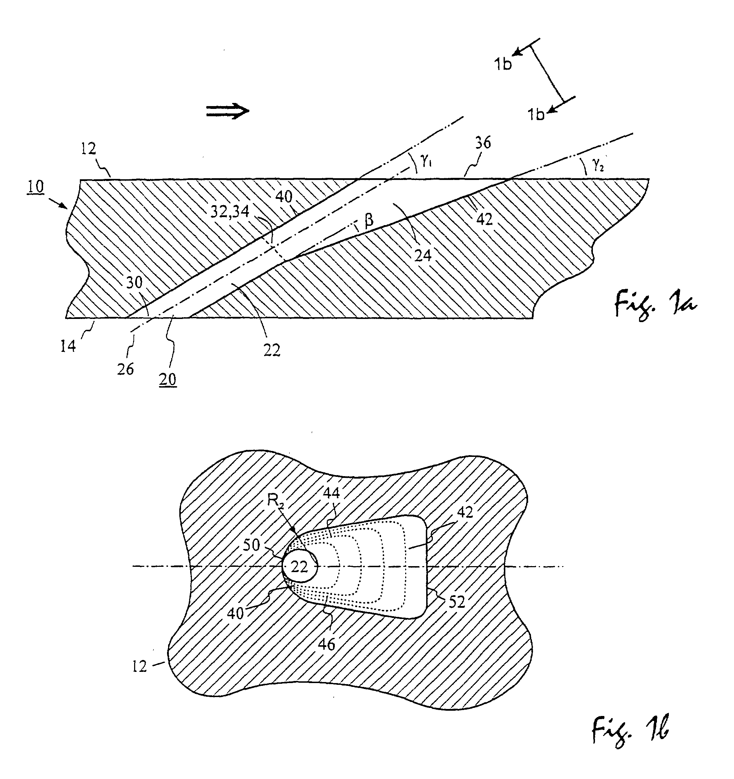

Vom Auslaß 32 des Zuführabschnitts 22 strömt die Kühlluft in den Diffusorabschnitt 24. Der Diffusorabschnitt 24 weist zwei voneinander beanstandete Innenflächen 40, 42 auf, die im Ausführungsbeispiel von Fig. 1a voneinander unter einem Winkel von β = 10° divergieren. In der Seitenansicht von Fig. 1(a) ist die Schnittkante der ersten Innenfläche 40 parallel zur Achse 26 des Filmkühllochs 20. Die Achse 26 tritt in diesem Ausführungsbeispiel unter einem Winkel von 30° an der äußeren Oberfläche 12 aus. Die Innenflächen 40,42 bilden somit mit der äußeren Oberfläche 12 die Winkel γ₁ = 30° bzw. γ₂ = 20°. Die Schnittkanten der Innenflächen 40,42 mit der äußeren Oberfläche sind mit den Bezugszeichen 50 bzw. 52 bezeichnet. Wie in Fig. 1b zu sehen, weist der Diffusorabschnitt weiter Seitenflächen 44 und 46 auf, die die Innenflächen 40, 42 schneiden. Beide Seitenflächen 44,46 divergieren zu dem Auslaß 36 des Diffusorabschnitts hin von der Achse 26 des Filmkühllochs weg.

Dadurch wird eine seitliche Ausbreitung der Kühlluft erreicht, wodurch auf der äußeren Oberfläche 12 auch zwischen den einzelnen Filmkühllöchern 20 ein schützender Kühlluftfilm bereitgestellt wird.

Durch den Diffusor wird der Kühlluftstrom schnell in Richtung auf die Strömungsrichtung des Heißgases umgelenkt, so daß sich die ausgeblasen Kühlluft als schützender Film an die Profiloberfläche anlegt. Die Ausblaseraten sind dabei klein, so daß die Gefahr, daß die Kühlluft durch die Strömungsgrenzschicht hindurchtritt gering ist.

Die Innenfläche 40 ist kreisförmig zur Achse 26 des Filmkühllochs 20 hin gerundet. An der Schnittkante 50, dem Schnitt der Innenfläche 40 mit der äußeren Oberfläche 12 beträgt der Krümmungsradius *R*_{*2*}. Der Zuführabschnitt 22 ist in diesem Ausführungsbeispiel zylindrisch mit konstantem Querschnitt ausgestaltet. Der Auslaß 32 des Zuführabschnitts fällt in diesem Ausführungsbeispiel mit dem Einlaß 32 des Diffusorabschnitts 24 zusammen. Der Krümmungsradius der ersten Innenfläche 40 am Einlaß 34 des Diffusorabschnitts ist also durch den zylindrischen Zuführabschnitt bestimmt. Sein Wert beträgt an dieser Stelle somit *d*/*2*, wobei *d* den Durchmesser des Zylinderabschnitts bezeichnet. Zwischen dem Einlaß 34 und Auslaß 36 des Diffusorabschnitts steigt der Krümmungsradius der Innenfläche 40 stetig und kontinuierlich von *d*/*2* auf *R*_{*2*}. Die zweite Innenfläche 42 ist im wesentlichen eben und geht an den Schnittlinien mit den Seitenflächen 44,46 in einer glatten Kurve mit Krümmungsradius *R* in diese über.

In bekannten Lösungen (Figuren 2(b), 3(b)) sind die ersten Innenflächen 140, 240 eben ausgestaltet. Sie gehen in den in Figuren 2(b) und 3(b) gezeigten Fällen zwar in einer glatten Kurve in die Seitenflächen 144, 146 bzw. 244, 246 über, es verbleibt jedoch stets ein ebenes Teilstück beträchtlicher Grösse. in der Nähe der stromaufwärtigen Auslasskanten (W in Fig. 2(a) und 3(a)) ist die Wandstärke besonders gering und damit anfällig gegen Fremdkörperaufprall. Durch die Abrundung der ersten Innenfläche 40 in der Erfindung wird die Steifigkeit dieses Bereichs signifikant erhöht, da die beim Aufprall entstehende Kräfte seitlich in Bereiche mit größerer Wandstärke abgelenkt werden. Darüber hinaus wird durch die Ausrundung der kritische Bereich der äußeren Oberfläche 12, unter der sich Bereiche sehr geringer Wandstärke befinden, im Vergleich zu den bekannten Designs deutlich verkleinert.

Zur Erzielung maximaler Kühleffektivität ist die Kante 52 weiterhin nicht-kreisförmig gestaltet. Dies wirkt sich auf die Stabilität des Lochs jedoch nicht nachteilig aus, da die Wand an der Kante 52 nahezu ihre maximale Dicke aufweist. Die Stabilität des Filmkühllochs 20 von Fig. 1 reicht somit an die Stabilität zylinderförmiger Kühllöcher heran. Die Kühleigenschaften sind jedoch wegen des kaum veränderten Verhältnisses von Diffusoröffnung zu Zuführöffnung einem Zylinderloch weit überlegen.

Wählt man für den Radius *R*_{*2*} den geringstmöglichen Wert, *R*_{*2*} = *d*/*2*, so ist der Krümmungsradius der ersten Innenfläche 340 entlang der Achse des Filmkühllochs konstant (Fig. 4). Die Stabilität eines solchen Filmkühllochs entspricht praktisch der eines Zylinderlochs mit Durchmesser *d*, es weist jedoch weit überlegene Kühleigenschaften auf.

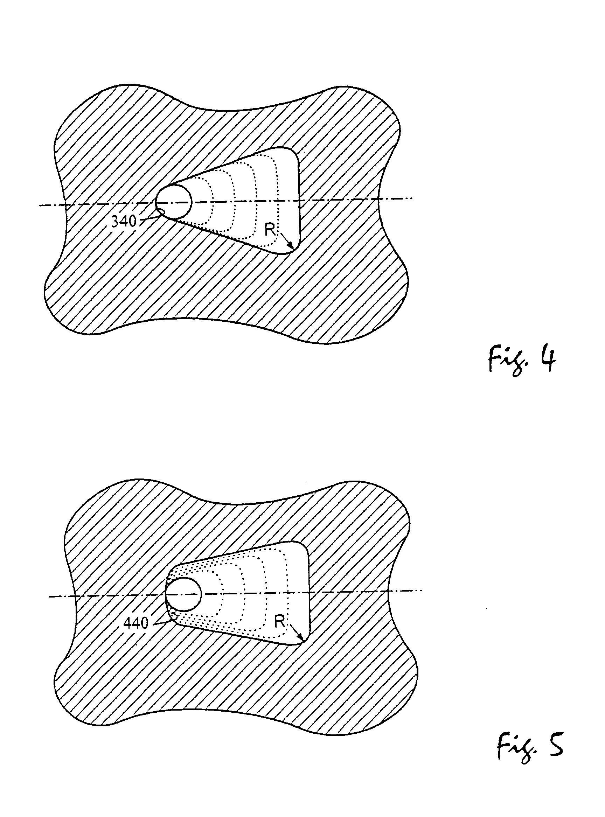

In einer weiteren Ausführungsform (Fig. 5) ist die erste Innenfläche 440 elliptisch gerundet, d.h. die Querschnitte des Filmkühllochs mit Ebenen parallel zur äußeren Oberfläche zeigen als Schnittkante je einen Ellipsenbogen. Obwohl in geringerem Ausmaß als bei einer kreisförmigen Ausrundung führt auch diese Ausgestaltung zu einer merklichen Erhöhung der Stabilität. Auch die Verwendung andere Kegelschnitte, etwa von parabolischen oder hyperbolischen Ausrundung führen zu einer erhöhten Stabilität.

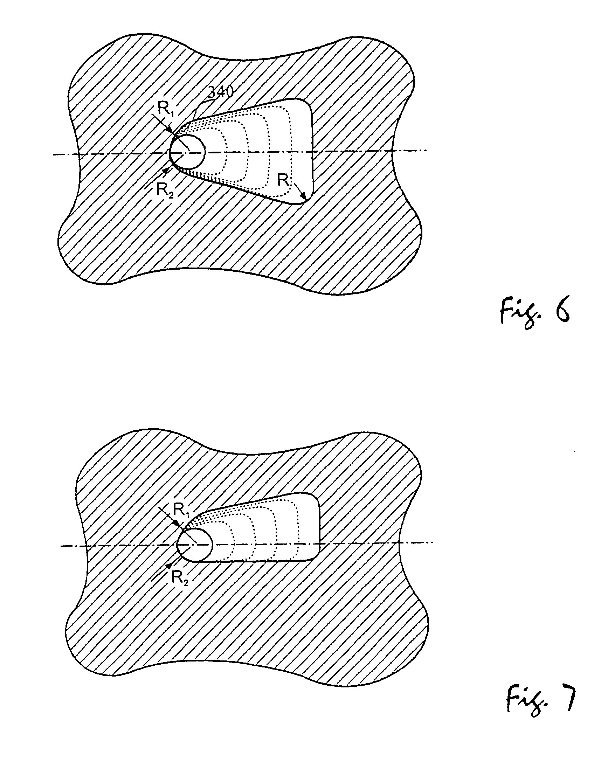

In Fig. 6 ist eine Ausführungsform gezeigt, in der die erste Innenfläche 540 durch Verwendung von zwei Korbbögen mit verschiedenen Radien R₁, R₂ gerundet ist. Eine solche Ausführungsform ist insbesondere dann zweckmäßig, wenn die Achse der Filmkühllöcher einen zusätzlichen lateralen Winkel zur Heißgasströmung aufweist. In manchen Situationen ist es vorteilhaft, die Filmkühllöcher nur nach einer Seite hin seitlich aufzuweiten. Auch in einem solchen Fall ist die Verwendung von zwei Korbbögen mit unterschiedlichem Radius für die aufgeweitete und die nicht aufgeweitete Seite zweckmäßig (Fig. 7).

### Bezugszeichenliste

- 10: gekühlte Wand
- 12,112,212: äußere Oberfläche
- 14: innere Oberfläche
- 20,120,220: Filmkühlloch
- 22: Zuführabschnitt
- 24: Diffusorabschnitt
- 26: Achse des Filmkühllochs
- 30: Einlaß des Zuführabschnitts
- 32: Auslaß des Zuführabschnitts
- 34: Einlaß des Diffusorabschnitts
- 36: Auslaß des Diffusorabschnitts
- 40,140,240, 340,440,540: erste Innenfläche des Diffusorabschnitts
- 42: zweite Innenfläche des Diffusorabschnitts
- 44,144,244: Seitenfläche des Diffusorabschnitts
- 46,146,246: Seitenfläche des Diffusorabschnitts
- 50: stromaufwärtige Schnittkante
- 52: stromabwärtige Schnittkante

## Patentansprüche

1. Gekühlte Wand (10) mit einer äusseren Oberfläche (12), die einem Heissgasstrom ausgesetzt ist, der in stromabwärtiger Richtung an der äusseren Oberfläche entlangströmt, mit einer inneren Oberfläche (14), mit zumindest einem Filmkühlloch (20) innerhalb der Wand (10), welches einen Diffusorabschnitt (24) und einen Auslass (36) an der äusseren Oberfläche (12) aufweist, wobei die Achse (26) des Filmkühllochs (20) so gerichtet ist, dass eine Kühlmittelströmung aus dem Auslass (36) so gerichtet wird, dass sie eine Geschwindigkeitskomponente entlang der stromabwärtigen Richtung hat, wobei der Diffusorabschnitt (24) eine erste Innenfläche (40) mit Abstand von einer zweiten Innenfläche (42) aufweist, wobei die erste und die zweite Innenfläche (40) und (42) die äussere Oberfläche (12) der Wand (10) schneiden, und die Schnittkante der ersten Innenfläche (40) mit der äusseren Oberfläche (12) eine stromaufwärtige Kante (50) des Auslasses (36) bildet, und die Schnittkante der zweiten Innenfläche (42) mit der äusseren Oberfläche (12) eine stromabwärtige Kante (52) des Auslasses (36) bildet, wobei der Diffusorabschnitt (24) Seitenflächen (44) und (46) aufweist, die einander zugewandt sind, die die erste und die zweite Innenfläche (40) und (42) verbinden, und die zu dem Auslass (36) des Diffusorabschnitts (24) hin voneinander divergieren, **dadurch gekennzeichnet, dass** der Schnitt der ersten Innenfläche (40) des Diffusorabschnitts (24) mit einer parallel zur äusseren Oberfläche (12) liegenden Schnittebene ein relativ zur Achse (26) des Filmkühllochs (20) konvex gekrümmtes Profil ergibt.

2. Gekühlte Wand nach Anspruch 1, bei der der Schnitt der ersten Innenfläche (40) des Diffusorabschnitts (24) mit einer parallel zur äusseren Oberfläche (12) liegenden Schnittebene ein relativ zur Achse (26) des Filmkühllochs (20) elliptisches, insbesondere kreisförmig gerundetes Profil ergibt.

3. Gekühlte Wand nach Anspruch 1, bei der der Schnitt der ersten Innenfläche (40) des Diffusorabschnitts (24) mit einer parallel zur äusseren Oberfläche (12) liegenden Schnittebene ein relativ zur Achse (26) des Filmkühllochs (20) parabolisches Profil ergibt.

4. Gekühlte Wand nach Anspruch 1, bei der der Schnitt der ersten Innenfläche (40) des Diffusorabschnitts (24) mit einer parallel zur äusseren Oberfläche (12) liegenden Schnittebene relativ zur Achse (26) des Filmkühllochs (20) ein Profil in Form von zumindest zwei Korbbögen ergibt.

5. Gekühlte Wand nach einem der vorigen Ansprüche, bei der die erste Innenfläche (40) des Diffusorabschnitts (24) in einer glatten Kurve in die Seitenflächen (44) und (46) übergeht.

6. Gekühlte Wand nach einem der vorigen Ansprüche, bei der die zweite Innenfläche (42) des Diffusorabschnitts (24) im wesentlichen eben ist und/oder in einer glatten Kurve in die Seitenflächen (40) und (46) übergeht.

7. Gekühlte Wand nach einem der vorigen Ansprüche, bei der die erste Innenfläche (40) und die zweite Innenfläche (42) des Diffusorabschnitts (24) zu dem Auslass (36) des Diffusorabschnitts (24) hin unter einem Winkel kleiner als 30° voneinander divergieren, bevorzugt unter einem Winkel zwischen 5° und 20°.

8. Gekühlte Wand nach einem der vorigen Ansprüche, bei der wenigstens eine, bevorzugt beide Seitenflächen (44) und (46) des Diffusorabschnitts (24) relativ zur Achse (26) des Filmkühllochs (20) unter einem Winkel grösser als 5°, bevorzugt grösser als 10° divergieren.

9. Gekühlte Wand nach einem der vorigen Ansprüche, bei der die Achse (26) jedes Filmkühllochs (20) mit einer äusseren Oberfläche (12) einen Winkel zwischen 5° und 50°, bevorzugt zwischen 15° und 40°, besonders bevorzugt zwischen 25° und 35° einschliesst.

10. Gekühlte Wand nach einem der vorigen Ansprüche, bei der jedes Filmkühlloch (20) einen Zuführabschnitt (22) aufweist, wobei der Zuführabschnitt (22) einen Einlass (30) an der inneren Oberfläche (14) aufweist, und der Auslass (32) des Zuführabschnitts (22) den Einlass (34) des Diffusorabschnitts (24) bildet.

11. Gekühlte Wand nach Anspruch 10, bei der der Zuführabschnitt (22) zwischen seinem Einlass (30) und seinem Auslass (32) einen konstanten Querschnitt aufweist, bevorzugt einen konstanten elliptischen Querschnitt aufweist.

12. Gekühlte Wand nach einem der vorigen Ansprüche, bei der die Wand (10) die äussere Wand eines Hohlprofilkörpers, insbesondere einer Gasturbinenschaufel ist.

## Claims

1. Cooled wall (10) having an outer surface (12), which is exposed to a hot-gas flow, which flows along the outer surface in the downstream direction, having an inner surface (14), having at least one film-cooling hole (20) within the wall (10), which film-cooling hole (20) has a diffuser section (24) and an outlet (36) at the outer surface (12), the axis (26) of the film-cooling hole (20) being directed in such a way that a cooling-medium flow from the outlet (36) is directed in such a way that it has a velocity component in the downstream direction, the diffuser section (24) having a first internal surface (40) at a distance from a second internal surface (42), the first and the second internal surfaces (40) and (42) intersecting the outer surface (12) of the wall (10), and the intersection edge between the first internal surface (40) and the outer surface (12) forming an upstream edge (50) of the outlet (36), and the intersection edge between the second internal surface (42) and the outer surface (12) forming a downstream edge (52) of the outlet (36), the diffuser section (24) having side surfaces (44) and (46), which face one another, connect the first and the second internal surfaces (40) and (42) and diverge from one another toward the outlet (36) of the diffuser section (24), **characterized in that** the intersection of the first internal surface (40) of the diffuser section (24) with an intersection plane parallel to the outer surface (12) gives a convexly curved profile relative to the axis (26) of the film-cooling hole (20).

2. Cooled wall according to Claim 1, in which the intersection of the first internal surface (40) of the diffuser section (24) with an intersection plane parallel to the outer surface (12) gives a profile rounded in an elliptical manner, in particular in a circular manner, relative to the axis (26) of the film-cooling hole (20).

3. Cooled wall according to Claim 1, in which the intersection of the first internal surface (40) of the diffuser section 24 with an intersection plane parallel to the outer surface (12) gives a parabolic profile relative to the axis (26) of the film-cooling hole (20).

4. Cooled wall according to Claim 1, in which the insertion of the first internal surface (40) of the diffuser section (24) with an intersection plane parallel to the outer surface (12) gives a profile in the form of at least two compound curves relative to the axis (26) of the film-cooling hole (20).

5. Cooled wall according to one of the preceding claims, in which the first internal surface (40) of the diffuser section (24) merges in a smooth curve into the side surfaces (44) and (46).

6. Cooled wall according to one of the preceding claims, in which the second internal surface (42) of the diffuser section (24) is essentially plane and/or merges in a smooth curve into the side surfaces (40) and (46).

7. Cooled wall according to one of the preceding claims, in which the first internal surface (40) and the second internal surface (42) of the diffuser section (24) diverge from one another toward the outlet (36) of the diffuser section (24) at an angle of less than 30°, preferably at an angle of between 5° and 20°.

8. Cooled wall according to one of the preceding claims, in which at least one and preferably both of the side surfaces (44) and (46) of the diffuser section (24) diverge relative to the axis (26) of the film-cooling hole (20) at an angle of greater than 5°, preferably greater than 10°.

9. Cooled wall according to one of the preceding claims, in which the axis (26) of each film-cooling hole (20) encloses with an outer surface (12) an angle of between 5° and 50°, preferably between 15° and 40°, particularly preferably between 25° and 35°.

10. Cooled wall according to one of the preceding claims, in which each film-cooling hole (20) has a feed section (22), the feed section (22) having an inlet (30) at the inner surface (14), and the outlet (32) of the feed section (22) forming the inlet (34) of the diffuser section (24).

11. Cooled wall according to Claim 10, in which the feed section (22) has a constant cross section, preferably a constant elliptical cross section, between its inlet (30) and its outlet (32).

12. Cooled wall according to one of the preceding claims, in which the wall (10) is the outer wall of a hollow-profile body, in particular of a gas-turbine blade.

## Revendications

1. Paroi refroidie (10) avec une surface extérieure (12) qui est exposée à un courant de gaz chaud, qui s'écoule vers l'aval le long de la surface extérieure, avec une surface intérieure (14), avec au moins un trou de refroidissement pelliculaire (20) à l'intérieur de la paroi (10), lequel présente une portion de diffuseur (24) et une sortie (36) au niveau de la surface extérieure (12), l'axe (26) du trou de refroidissement pelliculaire (20) étant orienté de telle sorte qu'un écoulement de réfrigérant hors de la sortie (36) soit orienté de telle sorte qu'il ait une composante de vitesse le long de la direction aval, la portion de diffuseur (24) présentant une première surface intérieure (40) espacée d'une deuxième surface intérieure (42), la première et la deuxième surfaces intérieures (40) et (42) coupant la surface extérieure (12) de la paroi (10), et le bord de coupe de la première surface intérieure (40) formant avec la surface extérieure (12) un bord amont (50) de la sortie (36), et le bord de coupe de la deuxième surface intérieure (42) formant avec la surface extérieure (12) un bord aval (52) de la sortie (36), la portion de diffuseur (24) présentant des surfaces latérales (44) et (46) qui sont tournées l'une vers l'autre, qui relient la première et la deuxième surfaces intérieures (40) et (42), et qui divergent l'une de l'autre vers la sortie (36) de la portion de diffuseur (24), **caractérisée en ce que** la section de la première surface intérieure (40) de la portion de diffuseur (24) avec un plan de coupe parallèle à la surface extérieure (12) donne un profil de courbe convexe par rapport à l'axe (26) du trou de refroidissement pelliculaire (20).

2. Paroi refroidie (10) selon la revendication 1, dans laquelle la section de la première surface intérieure (40) de la portion de diffuseur (24) avec un plan de coupe parallèle à la surface extérieure (12) donne un profil arrondi de forme elliptique, en particulier circulaire, par rapport à l'axe (26) du trou de refroidissement pelliculaire (20).

3. Paroi refroidie selon la revendication 1, dans laquelle la section de la première surface intérieure (40) de la portion de diffuseur (24) avec un plan de coupe parallèle à la surface extérieure (12) donne un profil parabolique par rapport à l'axe (26) du trou de refroidissement pelliculaire (20).

4. Paroi refroidie selon la revendication 1, dans laquelle la section de la première surface intérieure (40) de la portion de diffuseur (24) avec un plan de coupe parallèle à la surface extérieure (12) donne un profil en forme d'au moins deux courbes bombées par rapport à l'axe (26) du trou de refroidissement pelliculaire (20).

5. Paroi refroidie selon l'une quelconque des revendications précédentes, dans laquelle la première surface intérieure (40) de la portion de diffuseur (24) se prolonge par une courbe lisse dans les surfaces latérales (44) et (46).

6. Paroi refroidie selon l'une quelconque des revendications précédentes, dans laquelle la deuxième surface intérieure (42) de la portion de diffuseur (24) est essentiellement plane et/ou se prolonge par une courbe lisse dans les surfaces latérales (40) et (46).

7. Paroi refroidie selon l'une quelconque des revendications précédentes, dans laquelle la première surface intérieure (40) et la deuxième surface intérieure (42) de la portion de diffuseur (24) divergent l'une de l'autre vers la sortie (36) de la portion de diffuseur (24) suivant un angle inférieur à 30°, de préférence suivant un angle compris entre 5° et 20°.

8. Paroi refroidie selon l'une quelconque des revendications précédentes, dans laquelle l'au moins une, de préférence les deux surfaces latérales (44) et (46) de la portion de diffuseur (24) divergent par rapport à l'axe (26) du trou de refroidissement pelliculaire (20) suivant un angle supérieur à 5°, de préférence supérieur à 10°.

9. Paroi refroidie selon l'une quelconque des revendications précédentes, dans laquelle l'axe (26) de chaque trou de refroidissement pelliculaire (20) avec une surface extérieure (12) inclut un angle compris entre 5° et 50°, de préférence entre 15° et 40°, particulièrement préférablement entre 25° et 35°.

10. Paroi refroidie selon l'une quelconque des revendications précédentes, dans laquelle chaque trou de refroidissement pelliculaire (20) présente une portion d'apport (22), la portion d'apport (22) présentant une entrée (30) sur la surface intérieure (14), et la sortie (32) de la portion d'apport (22) formant l'entrée (34) de la portion de diffuseur (24).

11. Paroi refroidie selon la revendication 10, dans laquelle la portion d'apport (22) présente entre son entrée (30) et sa sortie (32) une section transversale constante, de préférence une section transversale elliptique constante.

12. Paroi refroidie selon l'une quelconque des revendications précédentes, dans laquelle la paroi (10) est la paroi extérieure d'un corps de profil creux, en particulier d'une aube de turbine à gaz.
